(19) Europäisches Patentamt
European Patent Office
Office européen des brevets

(11) **EP 4 134 180 A1**

(12) **EUROPEAN PATENT APPLICATION**
published in accordance with Art. 153(4) EPC

(43) Date of publication:
**15.02.2023 Bulletin 2023/07**

(21) Application number: **21785423.1**

(22) Date of filing: **26.03.2021**

(51) International Patent Classification (IPC):
*B09B 3/00* (1980.01)          *B09B 5/00* (1980.01)
*C22B 1/02* (1968.09)          *C22B 5/10* (1968.09)
*C22B 7/00* (1968.09)          *C22B 15/00* (1968.09)
*C22B 23/02* (1968.09)          *H01M 10/54* (1974.07)

(52) Cooperative Patent Classification (CPC):
**B09B 3/00; B09B 5/00; C22B 1/02; C22B 5/10;**
**C22B 7/00; C22B 15/00; C22B 23/02; H01M 10/54;**
Y02P 10/20; Y02W 30/84

(86) International application number:
**PCT/JP2021/012823**

(87) International publication number:
**WO 2021/205903 (14.10.2021 Gazette 2021/41)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **07.04.2020 JP 2020069016**

(71) Applicant: **SUMITOMO METAL MINING CO., LTD.**
**Tokyo**
**105-8716 (JP)**

(72) Inventors:
• **HAGIO Tomoya**
  **Niihama-shi, Ehime 792-0002 (JP)**
• **YAMASHITA Yu**
  **Niihama-shi, Ehime 792-0002 (JP)**

(74) Representative: **Jones, Nicholas Andrew**
  **Withers & Rogers LLP**
  **2 London Bridge**
  **London SE1 9RA (GB)**

(54) **METHOD FOR RECOVERING VALUABLE METAL**

(57)    The purpose is to provide a method for recovering a valuable metal at low cost. The present invention is a method for recovering a valuable metal, the method comprising a step of preparing a burden material containing at least a valuable metal to obtain a raw material, a step of subjecting the raw material to an oxidation treatment and a reductive melting treatment to produce a reduced product containing an alloy and a slag, and a step of separating the slag from the reduced product to collect the alloy, in which the copper grade, which is a ratio of the mass of copper (Cu) to the total mass of nickel (Ni), cobalt (Co) and copper (Cu) contained in the alloy (i.e., a Cu/(Ni+Co+Cu) ratio), is adjusted to 0.250 or more.

**FIG. 1**

DISCARDED LITHIUM ION BATTERIES
⇩
DISCARDED BATTERY
PRETREATMENT STEP (S1)
⇩
FIRST CRUSHING
STEP (S2)
⇩
OXIDATIVE ROASTING
STEP (S3)
⇩
REDUCTIVE MELTING
STEP (S4)
⇩            ⇩
SLAG        ALLOY

EP 4 134 180 A1

**Description**

TECHNICAL FIELD

The present invention relates to a valuable metal recovery method.

BACKGROUND ART

In recent years, lithium ion batteries have become popular for their lightweight and high power. A well-known lithium ion battery has a structure including an outer case, and positive and negative electrode materials, a separator, and an electrolytic solution, which are sealed in the outer case. The outer case includes a metal, such as iron (Fe) or aluminum (Al). The negative electrode material includes a negative electrode current collector (e.g., a copper foil) and a negative electrode active material (e.g., graphite) bonded to the current collector. The positive electrode material includes a positive electrode current collector (e.g., an aluminum foil) and a positive electrode active material (e.g., lithium nickelate, lithium cobaltate) bonded to the current collector. The separator includes, for example, a porous polypropylene resin film. The electrolytic solution contains an electrolyte, such as lithium hexafluorophosphate ($LiPF_6$).
Hybrid cars and electric vehicles are among the major applications of lithium ion batteries. According to the life cycle of such vehicles, therefore, a huge number of lithium ion batteries, which are now installed in them, are expected to be discarded in the future. Some lithium ion batteries are also discarded if found defective during the manufacturing process. It is desirable to reuse such used batteries and such defective batteries occurring in the manufacturing process (hereinafter such batteries will be referred to as "discarded lithium ion batteries") as a resource.
A proposed technique for the reuse includes a pyrometallurgical smelting process that includes entirely melting discarded lithium ion batteries in a high-temperature furnace. Such a pyrometallurgical smelting process includes melting crushed discarded lithium ion batteries; separating valuable metals, such as cobalt (Co), nickel (Ni), and copper (Cu), which are to be recovered, and less valuable metals, such as iron (Fe) and aluminum (Al), based on the difference in oxygen affinity between the valuable and less valuable metals; and recovering the valuable metals. This technique oxidizes the less valuable metals as much as possible to form slag while it prevents the oxidation of the valuable metals as much as possible and recovers them in the form of an alloy.
For example, Patent Document 1 discloses a process for the recovery of enthalpy and metals from lithium ion batteries on a copper smelter, comprising the steps of: feeding a useful charge and slag formers to the smelter; and adding heating and reducing agents, characterized in that at least part of the heating and/or reducing agents is replaced by lithium ion batteries containing one or more of metallic iron, metallic aluminum, and carbon (see claim 1 of Patent Document 1). Using such a copper smelter, if possible, may allow valuable metals, such as copper and nickel, to be efficiently recovered from lithium ion batteries in conjunction with copper smelting. In such copper smelting, cobalt will be distributed into slag. A technique for recovering cobalt may include, for example, roasting discarded lithium ion batteries to separate an alloy and a slag; and subjecting the alloy to a hydrometallurgical process.
Patent Document 2 discloses a valuable metal recovery method for recovering valuable metals including nickel and cobalt from discarded lithium ion batteries containing nickel and cobalt, the method including: a melting step that includes subjecting the discarded batteries to melting to obtain a molten product; an oxidation step that includes subjecting the molten product to an oxidation treatment during the melting step or subjecting the discarded batteries to an oxidation treatment before the melting step; a slag separation step that includes separating a slag from the molten product to recover an alloy including the valuable metals; and a dephosphorization step that includes separating phosphorus from the alloy, wherein the dephosphorization step includes adding a lime-containing material to the alloy and then oxidizing the alloy (see claim 1 of Patent Document 2). Patent Document 2 proposes a process that includes adding silicon dioxide ($SiO_2$) and calcium oxide (CaO) during the melting of discarded lithium ion batteries so that the resulting slag can have a lower melting point for the recovery of the valuable metals (see paragraphs [0037] and [0038] of Patent Document 2) .

Patent Document 1: PCT International Publication No. WO2015/096945
Patent Document 2: Japanese Patent No. 5853585

DISCLOSURE OF THE INVENTION

Problems to be Solved by the Invention

Unfortunately, some problems remain with the methods proposed in Patent Documents 1 and 2. For example, the method of Patent Document 1 needs high-temperature treatment. The method of Patent Document 1 also has a problem in that the slag can erode the oxide in the treatment vessel to cause it to crack easily. Such erosion, if occurring, may extremely increase the facility cost and may preclude inexpensive recovery of valuable metals. In the method disclosed in Patent Document 2, a flux is added in a large amount, which leads to a low throughput for the treatment of discarded lithium ion batteries. Moreover, since the flux contains a large amount of silicon dioxide ($SiO_2$), which is an acidic oxide, phosphorus may be insufficiently removed in the form of an acidic oxide from the metallic material. Those problems cause the need to develop a technique for inexpensively recovering valuable metals from discarded lithium ion batteries.

In light of the circumstances, the inventors have conducted intensive studies. As a result, the inventors have focused on the copper content of an alloy obtained in a reductive melting step and have found that regulating the copper content within a predetermined range makes it possible to inexpensively recover valuable metals by a process performed at a lower temperature than conventional ones.

The present invention has been completed based on such findings, and an object of the present invention is to provide a method capable of recovering valuable metals inexpensively. Means for Solving the Problems

The present invention encompasses aspects (1) to (7) shown below. In the present description, any numerical range specified using "to" refers to a range including the upper and lower limits of the range. In other words, the expression "X to Y" has the same meaning as "X or more and Y or less".

(1) A valuable metal recovery method including the steps of: preparing a charge including at least a valuable metal to give a raw material; subjecting the raw material to an oxidation treatment and a reductive melting treatment to produce a reduced product including an alloy having a copper grade of 0.250 or more and a slag; and separating the slag from the reduced product to recover the alloy, in which the copper grade is defined as the ratio (Cu/(Ni + Co + Cu)) of the mass of copper (Cu) to the total mass of nickel (Ni), cobalt (Co), and copper (Cu) in the alloy.
(2) The method according to aspect (1), in which the alloy has a copper grade of 0.280 or more.
(3) The method according to aspect (1) or (2), in which the preparing of the charge includes adding a copper material to the charge to produce the raw material.
(4) The method according to any one of aspects (1) to (3), in which the oxidation treatment includes subjecting the raw material, which is to be molten, to oxidative roasting to produce an oxidatively roasted product, and the reductive melting treatment includes subjecting the oxidatively roasted product to reductive melting to produce the reduced product.
(5) The method according to any one of aspects (1) to (4), in which the reductive melting treatment includes introducing a reducing agent.
(6) The method according to any one of aspects (1) to (5), in which the reductive melting treatment includes heating at a temperature of 1,300°C or more and 1,450°C or less.
(7) The method according to any one of aspects (1) to (6), in which the charge includes a discarded lithium ion battery.

Effects of the Invention

The present invention provides a method capable of inexpensively recovering valuable metals.

BRIEF DESCRIPTION OF THE DRAWINGS

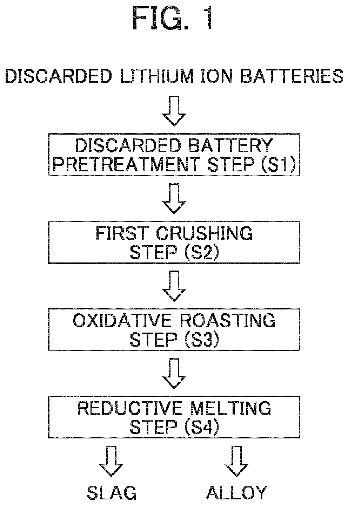

FIG. 1 is a chart showing an example of a valuable metal recovery method.

PREFERRED MODE FOR CARRYING OUT THE INVENTION

Specific modes of the present invention (hereinafter referred to as "embodiments") will be described. It should be noted that the embodiments described below are not intended to limit the present invention and may be altered or modified in various ways without departing from the gist of the present invention.

1. Valuable Metal Recovery Method

The valuable metal recovery method according to an embodiment includes the steps of: preparing a charge including at least a valuable metal to give a raw material (preparation step); subjecting the raw material to an oxidation treatment and a reductive melting treatment to produce a reduced product including an alloy and a slag (oxidation and reductive melting step); and separating the slag from the reduced product to recover the alloy (slag separation step). In the method, the alloy has a copper grade of 0.250 or more, wherein the copper grade is defined as the ratio (Cu/(Ni + Co + Cu)) of the mass of copper (Cu) to the total mass of nickel (Ni), cobalt (Co), and copper (Cu) in the alloy.

The method according to an embodiment is for recovering a valuable metal from a charge including at least the valuable metal. The valuable metal, which is to be recovered, may be at least one metal or alloy selected from the group consisting of copper (Cu), nickel (Ni), cobalt (Co), and any combination of these metals. An embodiment is directed to a recovery method mainly based on a pyrometallurgical smelting process. However, the method according to an embodiment may include a pyrometallurgical process and a hydrometallurgical process. Hereinafter, each of the steps will be described in detail.

Preparation Step

The preparation step includes preparing a charge to give a raw material. The charge, which is the target to be treated for recovery of the valuable metal, may include at least one valuable metal selected from the group consisting of copper (Cu), nickel (Ni), cobalt (Co), and any combination of these metals. The component (Cu, Ni, Co) of the charge may be in a metallic form or a compound form, such as an oxide form. The charge may also contain an inorganic component other than the component (Cu, Ni, Co) mentioned above and may further contain an organic component.

The charge may be any appropriate material, examples of which include discarded lithium ion batteries, dielectric materials (e.g., capacitors), and magnetic materials. The charge may be in any form suitable for the treatment in the subsequent oxidation and reductive melting step. The preparation step may include subjecting the charge to crushing or any other treatment to convert it into a suitable form. The preparation step may further include subjecting the charge to heat treatment, separation, or other treatments to remove unnecessary components, such as water and organic materials.

The raw material may include only the charge or include the charge and an additional material. Only the charge may be used when it contains such a large amount of copper (Cu) that an alloy with a sufficiently high copper grade can be produced in the subsequent oxidation and reduction step. On the other hand, an additional material, such as a copper material, may be added to the charge when the charge contains no copper (Cu) or only a small amount of copper (Cu).

Oxidation and Reductive Melting Step

The oxidation and reductive melting step includes subjecting the resulting raw material to an oxidation treatment and a reductive melting treatment to produce a reduced product. The reduced product includes an alloy (e.g., a metallic material, a molten alloy) and a slag, having the alloy and the slag separated from each other. The alloy includes the valuable metal. In the reduced product, therefore, a valuable metal-containing component (alloy) is separable from other components. This is attributable to the fact that the less valuable metal (e.g., Al) has a high affinity for oxygen while the valuable metal has a low affinity for oxygen. In general, for example, aluminum (Al), lithium (Li), carbon (C), manganese (Mn), phosphorus (P), iron (Fe), cobalt (Co), nickel (Ni), and copper (Cu) preferentially oxidize in the order of Al > Li > C > Mn > P > Fe > Co > Ni > Cu. Namely, among them, aluminum (Al) is most prone to oxidation, while copper (Cu) is most resistant to oxidation. Therefore, the less valuable metal (e.g., Al) easily undergoes oxidation to form a slag, while the valuable metal (Cu, Ni, Co) undergoes reduction to form a molten metal (alloy). Thus, the less valuable metal and the valuable metal can be separated into a slag and an alloy, respectively.

In an embodiment, the alloy has a copper grade of 0.250 or more. As used herein, the term "copper grade" refers to the ratio (Cu/(Ni + Co + Cu)) of the mass of copper (Cu) to the total mass of nickel (Ni), cobalt (Co), and copper (Cu) in the alloy. Copper (Cu) contributes to a decrease in the melting temperature of the alloy. By increasing the copper grade to 0.250 or more, the melting temperature of the alloy can be lowered to 1,450°C or less. This makes it possible to lower the treatment temperature in the oxidation and reductive melting step and thus to recover the valuable metal inexpensively. The copper grade is preferably 0.280 or more. This will further lower the melting temperature of the alloy to 1,400°C or less. The copper grade may be 0.300 or more, 0.320 or more, 0.340 or more, or 0.360 or more. If the copper grade is too high, however, the alloy may have too low a content of nickel and cobalt, and the total amount of the alloy may be too large. This may increase the amount of heat required for the melting and the amount of chemicals used for hydrometallurgical treatment of the resulting alloy, which is not economical. For the purpose of mainly recovering nickel and cobalt, therefore, the copper grade is preferably not too high. The copper grade may be 0.900 or less, 0.800 or less, 0.700 or less, 0.600 or less, or 0.500 or less.

The copper grade may be adjusted by controlling the composition of the raw material, such as the charge, or the composition of the material to be treated. For example, a copper (Cu)-rich charge may be used for the raw material to produce an alloy with a high copper grade. A copper-rich component may also be added to the material (the charge, the raw material to be molten, or the oxidatively roasted product) to be subjected to the reductive melting treatment. For example, the preparation of the charge may include adding a copper material to the charge to form the raw material. The copper material may be copper scrap. At any rate, any method capable of adjusting the copper grade of the alloy within a predetermined range may be used.

In an embodiment, the melting treatment can be performed at a temperature of 1,450°C or less, specifically, at a temperature as low as 1,400°C or less, even without adding a flux. Thus, there is no need to add a flux. However, an embodiment does not preclude the addition of a flux and may include adding a flux. The flux may be a calcium (Ca)-based compound, such as calcium oxide (CaO) or calcium carbonate ($CaCO_3$).

The oxidation and reductive melting step may include performing the oxidation treatment and the reductive melting treatment simultaneously or separately. The simultaneous method may include blowing an oxidizing agent into the molten product being produced during the reductive melting treatment. Specifically, an oxidizing agent through a metal tube (lance) inserted in the molten product may be bubbled into the molten product. In this case, the oxidizing agent may be air, pure oxygen, an oxygen-rich gas, or any other oxygen-containing gas. However, the oxidation and reductive melting step preferably includes performing oxidative roasting and reductive melting separately. Such a method may include oxidatively roasting the prepared raw material during the oxidation treatment to produce an oxidatively roasted product and subjecting the oxidatively roasted product to reductive melting during the reductive melting treatment to produce a reduced product. The oxidative roasting and the reductive melting will be described in detail below.

Oxidative Roasting

The oxidative roasting includes subjecting the raw material to oxidative roasting (oxidation treatment) to produce an oxidatively roasted product. Even in a case where the raw material (e.g., the charge) contains carbon, the oxidative roasting, if performed, will remove the carbon by oxidation and thus accelerate the integration of valuable metals into an alloy in the subsequent reductive melting. Thus, the reductive melting can reduce the valuable metals and form them into localized molten fine particles. Carbon can physically interfere with the gathering of molten fine particles (valuable metal). Without the oxidative roasting, therefore, carbon may interfere with the gathering of molten fine particles and thus interfere with the separability between the metallic material (alloy) and the slag, which may lead to a reduction in valuable metal recovery ratio. On the other hand, the previous removal of carbon by the oxidative roasting will facilitate the gathering of molten fine particles (valuable metal) in the reductive melting and provide a further increase in valuable metal recovery ratio.

Moreover, the oxidative roasting, if performed, will prevent uneven oxidation. The oxidative roasting preferably includes performing the treatment (oxidative roasting) at a degree of oxidation that allows the less valuable metal (e.g., Al) in the raw material (e.g., the charge) to be oxidized. The degree of oxidation can be easily controlled by controlling the temperature, time, and/or atmosphere of the oxidative roasting. Thus, the degree of oxidation can be more strictly controlled in the oxidative roasting, which prevents uneven oxidation.

The degree of oxidation may be controlled as described below. In general, as mentioned above, aluminum (Al), lithium (Li), carbon (C), manganese (Mn), phosphorus (P), iron (Fe), cobalt (Co), nickel (Ni), and copper (Cu) preferentially oxidize in the order of Al > Li > C > Mn > P > Fe > Co > Ni > Cu. The oxidative roasting may include allowing oxidation to proceed until the whole amount of aluminum (Al) is oxidized. The oxidation may be accelerated to such an extent that iron (Fe) is partially oxidized, but the degree of oxidation should be kept at such a level that oxidation and recovery of cobalt (Co) into slag are prevented.

In the oxidative roasting, an appropriate amount of an oxidizing agent is preferably introduced to control the degree of oxidation. The introduction of an oxidizing agent is particularly preferred in a case where the charge includes discarded lithium ion batteries. A certain lithium ion battery has an outer case including a metal, such as aluminum or iron. It also has positive and negative electrode materials containing an aluminum foil and a carbon material, respectively. The assembled battery also has an outer package including a plastic material. Such materials can all act as a reducing agent. By introducing an oxidizing agent, the degree of oxidation can be controlled within an appropriate range in the oxidative roasting.

The oxidizing agent may be any type capable of oxidizing carbon and the less valuable metal (e.g., Al). Preferably, the oxidizing agent is air, pure oxygen, an oxygen-rich gas, or any other oxygen-containing gas, which is easy to handle. As a guide, the oxidizing agent may be introduced in an amount (chemical equivalents) about 1.2 times (e.g., 1.15 to 1.25 times) that required to oxidize all target materials.

The oxidative roasting (oxidation treatment) preferably includes heating at a temperature of 700°C or more and 1,100°C or less, more preferably at a temperature of 800°C or more and 1,000°C or less. At 700°C or more, carbon can be oxidized in a shorter period of time with a higher efficiency. At 1,100°C or less, the oxidative roasting can be performed at a low thermal energy cost with a high efficiency.

The oxidative roasting (oxidation treatment) may be performed using a known roasting furnace. The oxidative roasting is preferably performed in a preliminary furnace different from the melting furnace for use in the subsequent reductive melting. The roasting furnace may be any type capable of roasting the charge while supplying the oxidizing agent (e.g., oxygen) for the oxidation treatment in its interior. The roasting furnace may be, for example, a conventionally known rotary kiln or tunnel kiln (hearth-type furnace).

Reductive Melting

The reductive melting may include subjecting the resulting oxidatively roasted product to heating and reductive melting to produce a reduced product. The reductive melting aims to keep intact the oxide of the less valuable metal (e.g., Al), which is produced in the oxidative roasting, and to melt and reduce the oxides of valuable metals (Cu, Ni, Co) into a molten alloy capable of being recovered. The material resulting from the reduction treatment is also referred to as the "reduced product", and the alloy obtained in the form of a molten material is also referred to as the "molten alloy".

The reductive melting preferably includes introducing a reducing agent. The reducing agent is preferably carbon and/or carbon monoxide. Carbon has the ability to readily reduce valuable metals (Cu, Ni, Co) to be recovered. For example, one mole of carbon can reduce two moles of valuable metal oxides (e.g., copper oxide, nickel oxide). Moreover, the reduction technique using carbon or carbon monoxide is highly safe as compared to techniques using a metallic reducing agent (e.g., thermite reaction methods using aluminum). The carbon may be artificial graphite and/or natural graphite. Coal or coke may also be used if there is no risk of impurity contamination.

The reductive melting may be performed at any heating temperature. Preferably, the reductive melting is performed at a heating temperature of 1,300°C or more and 1,450°C or less, more preferably at a heating temperature of 1,350°C or more and 1,400°C or less. At a temperature above 1,450°C, unnecessary consumption of thermal energy may occur, and heavy deterioration of a refractory component, such as a crucible, may occur to reduce productivity. At a temperature below 1,300°C, the separability between the slag and the alloy may degrade, which may cause the problem of a decrease in recovery ratio. The reductive melting may be performed using a known technique. Such a technique may include, for example, charging the oxidatively roasted product into an alumina ($Al_2O_3$) crucible; and heating it by resistance heating or other methods. In some cases, generation of harmful substances, such as dust and exhaust gas, occurs during the reductive melting. Such harmful substances can be detoxified by a known treatment, such as an exhaust gas treatment.

The use of the oxidative roasting can eliminate the need for an additional oxidation treatment in the reductive melting. In a case where insufficient oxidation occurs in the oxidative roasting or in a case where the degree of oxidation is to be further controlled, however, an additional oxidation treatment may be performed in the reductive melting. The additional oxidation treatment allows for more strict control of the degree of oxidation.

Slag Separation Step

The slag separation step includes separating the slag from the reduced product resulting from the oxidation and reductive melting step to recover the alloy. The slag and the alloy have different specific gravities. The slag, which has a specific gravity lower than that of the alloy, gathers above the alloy. Thus, specific gravity separation can be used to separate and recover the alloy from the slag.

The slag separation step may be followed by a sulfurization step that includes sulfurizing the resulting alloy and by a crushing step that includes crushing the mixture of the resulting sulfurized product and the alloy. Moreover, the valuable metal alloy obtained through the pyrometallurgical smelting process described above may be subjected to a hydrometallurgical process. The hydrometallurgical process includes removing impurity components and separating and refining the valuable metals (Cu, Ni, Co) to recover the individual valuable metals. The hydrometallurgical process may be performed using known treatment techniques, such as neutralization and solvent extraction.

The method according to an embodiment described above produces an alloy with a melting temperature of 1,450°C or less, typically with a melting temperature of 1,400°C or less, which means that the resulting alloy will exhibit a low viscosity. Therefore, the slag separation step efficiently separates the alloy and the slag from each other, which results in efficient and inexpensive recovery of the valuable metal.

2. Recovery of Valuable Metal From Discarded Lithium Ion Batteries

In an embodiment, the charge may be any type as long as it contains a valuable metal. Preferably, the charge includes discarded lithium ion batteries. Discarded lithium ion batteries contain lithium (Li), valuable metals (Cu, Ni, Co), less valuable metals (Al, Fe), and carbon. From the charge including discarded lithium ion batteries, valuable metals can be efficiently separated and recovered. It should be noted that the term "discarded lithium ion battery" is intended to include not only a used lithium ion battery but also a discarded material occurring in the process of manufacturing lithium ion batteries, such as a defective product occurring in the process of manufacturing battery components such as positive electrode materials, some residues occurring in the manufacturing process, and generated refuses. Therefore, the term "discarded lithium ion battery" is interchangeable with "discarded lithium ion battery material".

A method for recovering valuable metals from discarded lithium ion batteries will be described with reference to FIG. 1. FIG. 1 is a flowchart of an example of the recovery method. Referring to FIG. 1, the method includes a discarded battery pretreatment step (S1) that includes removing electrolytic solutions and outer cases from discarded lithium ion batteries; a first crushing step (S2) that includes crushing discarded battery components to obtain a crushed product; an oxidative roasting step (S3) that includes subjecting the crushed product to oxidative roasting; and a reductive melting step (S4) that includes subjecting the oxidatively roasted product to reduction and melting to produce an alloy. Although not shown, the reductive melting step (S4) may be followed by a sulfurization step that includes sulfurizing the resulting alloy and a second crushing step that includes crushing the mixture of the resulting sulfurized product and the alloy. Hereinafter, each of the steps will be described in detail.

Discarded Battery Pretreatment Step

The discarded battery pretreatment step (S1) is performed in order to prevent explosion of discarded lithium ion batteries, to detoxify discarded lithium ion batteries, and to remove outer cases. Lithium ion batteries have a sealed system in which the electrolytic solution and other components are contained. Crushing intact lithium ion batteries is dangerous because of the risk of explosion. Thus, some measures should preferably be taken for discharging and for removal of the electrolytic solution. In many cases, the outer case includes a metal, such as aluminum (Al) or iron (Fe), and such a metallic outer case is relatively easy to recover directly. Thus, the discarded battery pretreatment step (S1) that includes removing the electrolytic solution and the outer case will increase the safety and the ratio of recovery of valuable metals (Cu, Ni, Co).

The pretreatment of discarded batteries may be performed using any appropriate method. For example, the pretreatment method may include mechanically opening holes in the discarded batteries with needle-shaped blades to allow the electrolytic solution to flow out. Alternatively, the pretreatment method may include heating the discarded batteries to burn the electrolytic solution and thus to detoxify them.

The discarded battery pretreatment step (S1) may include recovering aluminum (Al) or iron (Fe) from the outer case. In this case, the pretreatment step (S1) may include crushing the removed outer cases; and then sieving the crushed product with a sieve shaker. When made of aluminum (Al), the case can be easily crushed with low power, so that aluminum (Al) can be efficiently recovered. Magnetic force sorting may also be used to recover iron (Fe) from the outer case.

First Crushing Step

The first crushing step (S2) includes crushing the discarded lithium ion battery components to give a crushed product. This step aims to increase the reaction efficiency of the pyrometallurgical smelting process. The increase in the reaction efficiency results in an increase in the ratio of recovery of valuable metals (Cu, Ni, Co). The crushing may be performed using any specific method. The crushing may be performed using a conventionally known crushing machine, such as a cutter mixer. A combination of the discarded battery pretreatment step and the first crushing step corresponds to the preparation step described above.

Oxidative Roasting Step

The oxidative roasting step (S3) includes oxidatively roasting the crushed product, resulting from the first crushing step (S2), to produce an oxidatively roasted product. The details of this step are as described above.

Reductive Melting Step

The reductive melting step (S4) includes reducing the oxidatively roasted product, resulting from the oxidative roasting step (S3), to produce a reduced product. The details of this step are as described above.

Slag Separation Step

The slag separation step includes separating the slag from the reduced product, resulting from the reductive melting step (S4), to recover the alloy. The details of this step are as described above.

The slag separation step may be followed by a sulfurization step and a crushing step. The resulting valuable metal alloy may also be subjected to a hydrometallurgical process. The details of the sulfurization step, the crushing step, and the hydrometallurgical process are as described above.

EXAMPLES

The present invention will be described in more detail with reference to the examples and comparative examples below. It should be noted that the examples below are not intended to limit the present invention.

Example 1

(1) Recovery of Valuable Metals

Discarded lithium ion batteries were used for the charge from which valuable metals were to be recovered. The recovery was carried out according to the steps below.

Discarded Battery Pretreatment Step (Preparation Step)

Discarded lithium ion batteries were provided including 18650-type cylindrical batteries, used rectangular car batteries, and defective products collected in battery manufacturing processes. These discarded batteries were discharged by being immersed in brine, which was followed by removal of water and roasting at 260°C in the air to decompose and remove the electrolytic solutions and the outer cases, so that a battery component material was obtained.

First Crushing Step (Preparation Step)

The battery component material was crushed using a crushing machine (Good Cutter from Ujiie Manufacturing Co., Ltd.) to give a charge. Copper scrap (Cu) was added to the charge to form a raw material to be molten.

Oxidative Roasting Step

The raw material was oxidatively roasted to produce an oxidatively roasted product. The oxidative roasting was performed at 900°C for 180 minutes in the air using a rotary kiln.

Reductive Melting Step

Graphite in an amount 0.6 times the total moles of valuable metals (Cu, Ni, and Co) was added as a reducing agent to the oxidatively roasted product to form a mixture. The mixture was charged into an alumina ($Al_2O_3$) crucible. The mixture in the crucible was then heated to undergo reductive melting for alloy formation. As a result, a reduced product was obtained, including an alloy and a slag. The reductive melting was achieved using resistance heating at 1,450°C for 60 minutes.

Slag Separation Step

The slag was separated from the reduced product, so that the alloy was recovered, which was named the "recovered alloy".

(2) Evaluation

Analysis of Components in the Alloy and the Slag

Each of the recovered alloy and the slag was cooled and then crushed. Each crushed product was subjected to component analysis by X-ray fluorescence spectroscopy. Thus, the content of valuable metals (Cu, Ni, and Co) in each of the alloy and the slag was determined.

Valuable Metal Recovery Ratio

The ratio of recovery of each of valuable metals (Cu, Ni, and Co) was determined as follows. Specifically, the content of each of the metals (Cu, Ni, and Co) in each of the alloy and the slag, which was determined by the component analysis, was used to calculate the ratio of recovery of each of the metals according to Formula (1) below.
Formula (1):

$$\text{Ratio (\% by mass) of recovery of each metal}$$
$$= \frac{\text{Content of each metal in alloy}}{\text{Content of each metal in alloy} + \text{Content of each metal in slag}} \times 100 \cdots (1)$$

Examples 2 to 8

The proportion of the 18650-type cylindrical batteries, the used rectangular batteries, the defective products, and the metallic copper material was changed, and the melting temperature in the reductive melting step was changed to that shown in Table 1. The recovery of valuable metals and the evaluation of the recovery were performed as in Example 1 except for the changes described above.

(3) Results

The results obtained in Examples 1 to 8 are shown in Table 1. Examples 1 to 6 are examples according to the present invention, while Examples 7 and 8 are comparative examples.

The separability between the slag and the alloy (metallic material) was high in Examples 1 to 6, in which the copper grade was 0.253 or more. In Examples 1 to 6, therefore, a cobalt (Co) recovery ratio of at least 98.0% (good result) was obtained with all samples. Moreover, in Examples 3 to 6, a high cobalt recovery ratio was obtained even at a melting temperature of 1,400°C. Furthermore, a cobalt recovery ratio of at least 99.0% (excellent result) was obtained in Examples 4 to 6, in which the copper grade was 0.353 or more. In contrast, in Examples 7 and 8, the raw material failed to melt, and no valuable metal was recovered.

[Table 1]

| Sample | Composition of alloy (% by mass) | | | Cu grade | Melting temperature (°C) | Metal recovery ratio (% by mass) | | |
|---|---|---|---|---|---|---|---|---|
| | Cu | Ni | Co | | | Cu | Ni | Co |
| Example 1 | 25.3 | 38.2 | 36.5 | 0.253 | 1450 | 99.3 | 99.5 | 98.6 |
| Example 2 | 28.8 | 37.1 | 34.1 | 0.288 | 1450 | 99.4 | 99.4 | 98.9 |
| Example 3 | 32.6 | 35.4 | 32.0 | 0.326 | 1400 | 99.6 | 99.6 | 98.7 |
| Example 4 | 35.3 | 33.5 | 31.2 | 0.353 | 1400 | 99.5 | 99.7 | 99.0 |
| Example 5 | 37.1 | 31.8 | 31.1 | 0.371 | 1400 | 99.6 | 99.7 | 99.1 |
| Example 6 | 40.5 | 30.2 | 29.3 | 0.405 | 1400 | 99.8 | 99.8 | 99.2 |
| Example 7* | 21.3 | 38.7 | 40.0 | 0.213 | 1450 | - | - | - |
| Example 8* | 23.5 | 37.4 | 39.1 | 0.235 | 1450 | - | - | - |
| Note 1: The symbol * indicates that it is a comparative example. | | | | | | | | |

**Claims**

1. A valuable metal recovery method comprising the steps of:

   preparing a charge comprising at least a valuable metal to give a raw material;
   subjecting the raw material to an oxidation treatment and a reductive melting treatment to produce a reduced product comprising an alloy having a copper grade of 0.250 or more and a slag; and
   separating the slag from the reduced product to recover the alloy,
   wherein the copper grade is defined as the ratio (Cu/(Ni + Co + Cu)) of the mass of copper (Cu) to the total mass of nickel (Ni), cobalt (Co), and copper (Cu) in the alloy.

2. The method according to claim 1, wherein the alloy has a copper grade of 0.280 or more.

3. The method according to claim 1 or 2, wherein the preparing of the charge comprises adding a copper material to the charge to produce the raw material.

4. The method according to any one of claims 1 to 3, wherein the oxidation treatment comprises subjecting the raw material to oxidative roasting to produce an oxidatively roasted product, and the reductive melting treatment comprises subjecting the oxidatively roasted product to reductive melting to produce the reduced product.

**5.** The method according to any one of claims 1 to 4, wherein the reductive melting treatment comprises introducing a reducing agent.

**6.** The method according to any one of claims 1 to 5, wherein the reductive melting treatment comprises heating at a temperature of 1,300°C or more and 1,450°C or less.

**7.** The method according to any one of claims 1 to 6, wherein the charge comprises a discarded lithium ion battery.

# FIG. 1

DISCARDED LITHIUM ION BATTERIES

⇩

| DISCARDED BATTERY PRETREATMENT STEP (S1) |
|---|

⇩

| FIRST CRUSHING STEP (S2) |
|---|

⇩

| OXIDATIVE ROASTING STEP (S3) |
|---|

⇩

| REDUCTIVE MELTING STEP (S4) |
|---|

⇩          ⇩

SLAG          ALLOY

## INTERNATIONAL SEARCH REPORT

| International application No. |
|---|
| PCT/JP2021/012823 |

**A. CLASSIFICATION OF SUBJECT MATTER**

Int. Cl. B09B3/00(2006.01)i, B09B5/00(2006.01)i, C22B1/02(2006.01)i, C22B5/10(2006.01)i, C22B7/00(2006.01)i, C22B15/00(2006.01)i, C22B23/02(2006.01)i, H01M10/54(2006.01)i
FI: C22B7/00 C, B09B3/00 303A, B09B3/00 304J, B09B5/00 A ZAB, C22B1/02, C22B5/10, C22B15/00, C22B23/02, H01M10/54

According to International Patent Classification (IPC) or to both national classification and IPC

**B. FIELDS SEARCHED**

Minimum documentation searched (classification system followed by classification symbols)

Int. Cl. B09B3/00, B09B5/00, C22B1/02, C22B5/10, C22B7/00, C22B15/00, C22B23/02, H01M10/54

Documentation searched other than minimum documentation to the extent that such documents are included in the fields searched

Published examined utility model applications of Japan   1922-1996
Published unexamined utility model applications of Japan   1971-2021
Registered utility model specifications of Japan   1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-091826 A (SUMITOMO METAL MINING CO., LTD.) 16 May 2013, entire text, all drawings | 1-7 |
| A | JP 2012-172169 A (SUMITOMO METAL MINING CO., LTD.) 10 September 2012, entire text, all drawings | 1-7 |
| A | JP 2017-509786 A (UMICORE) 06 April 2017, entire text, all drawings | 1-7 |
| A | JP 2019-094536 A (SUMITOMO METAL MINING CO., LTD.) 20 June 2019, entire text, all drawings | 1-7 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 18.05.2021 | 25.05.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2021/012823 |

| Patent Documents referred to in the Report | Publication Date | Patent Family | Publication Date |
| --- | --- | --- | --- |
| JP 2013-091826 A | 16.05.2013 | (Family: none) | |
| JP 2012-172169 A | 10.09.2012 | US 2014/0174256 A1 entire text, all drawings EP 2677044 A1 CN 103380218 A KR 10-2013-0114723 A | |
| JP 2017-509786 A | 06.04.2017 | US 2017/0005374 A1 entire text, all drawings EP 3087208 A1 KR 10-2016-0102493 A CN 105849290 A | |
| JP 2019-094536 A | 20.06.2019 | CN 110719963 A entire text, all drawings KR 10-2020-0044878 A | |

Form PCT/ISA/210 (patent family annex) (January 2015)

## REFERENCES CITED IN THE DESCRIPTION

**Patent documents cited in the description**

- WO 2015096945 A

- JP 5853585 B